# EUROPÄISCHE PATENTANMELDUNG

(11) **EP 1 318 695 A2**
(43) Veröffentlichungstag der Anmeldung: **11.06.2003**
(21) Anmeldenummer: 02026676.3
(22) Anmeldetag: 29.11.2002
(51) Int. Cl.: H05B 3/50

(54) **Heizkörper für die Heizungsanlage eines Kraftfahrzeuges**

(30) Priorität: 10.12.2001 DE 10160544
(71) Anmelder: Beru AG, 71636 Ludwigsburg (DE)
(72) Erfinder: Nieling, Andreas, 71679 Asperg (DE)
(74) Vertreter: Pohlmann, Eckart, Dipl.-Phys.

(57) **Zusammenfassung**

Heizkörper für die Heizungsanlage eines Kraftfahrzeuges. Der Heizkörper umfaßt einen Block, der aus vom Kühlwasser durchströmten Heizrohren (4), PTC-Heizrohren (5) und damit in thermischem Kontakt stehenden Lamellen (2, 6) aufgebaut ist. Die PTC-Heizrohre (5) und die vom Kühlwasser durchströmten Heizrohre (4) sind in verschiedenen Ebenen im Block angeordnet und die Lamellen (2), die mit den PTC-Heizrohren (5) in thermischen Kontakt stehen, sind gegenüber den vom Kühlwasser durchströmten Heizrohren (4) thermisch isoliert, während die Lamellen (6), die mit dem vom Kühlwasser durchströmten Heizrohren in thermischen Kontakt stehen, gegenüber den PTC-Heizrohren (5) thermisch isoliert sind. Die PTC-Heizrohre (5) sind vorzugsweise gegenüber den damit in thermischem Kontakt stehenden Lamellen (2) elektrisch isoliert.

## Beschreibung

Die Erfindung betrifft einen Heizkörper für die Heizungsanlage eines Kraftfahrzeuges mit einem aus vom Kühlwasser durchströmten Heizrohren, PTC-Heizrohren und damit in thermischem Kontakt stehenden Lamellen aufgebauten Block.

Ein derartiger Heizkörper ist aus der EP 0 707 434 B1 bekannt. Bei diesem bekannten Heizkörper sind abwechselnd in einer Ebene vom Kühlwasser durchströmte Heizrohre und PTC-Heizrohre angeordnet, die ihre Wärme an die im Block angeordneten Lamellen abgeben.

Bei einem derartigen Aufbau sind somit zwei Heizsysteme, nämlich ein Heizsystem, das auf dem erwärmten Kühlwasser basiert, und ein elektrisches Heizsystem integriert.

Bei dem aus der EP 0 707 434 B1 bekannten Heizkörper ist es allerdings als nachteilig anzusehen, daß zum Einbau des elektrischen Heizsystems sonst im Block vorgesehenen vom Kühlwasser durchströmten Heizrohre durch PTC-Heizrohre ersetzt worden sind, so daß verglichen mit einem Heizkörper gleicher Größe und üblichem Aufbau ohne elektrischen Heizsystem weniger vom Kühlwasser durchströmte Heizrohre vorhanden sind. Das hat zur Folge, daß die Wärmetauscherleistung des Kühlwasserheizsystems geringer ist. Darüber hinaus stehen bei dem bekannten Heizkörper die Lamellen sowohl mit dem vom Kühlwasser durchströmten Heizrohren als auch den PTC-Heizrohren in thermischen Kontakt, was zu Folge hat, daß Wärme vom elektrischen Heizsystem über die gemeinsamen Lamellen zu einem erheblichen Teil an das in den vom Kühlwasser durchströmten Heizrohren fließende kältere Kühlwasser abgeführt wird und somit nicht zum Heizen der Luft zur Verfügung steht.

Die der Erfindung zugrunde liegende Aufgabe besteht daher darin, einen Heizkörper der eingangs genannten Art zu schaffen, der bei gleichen Abmessungen eine höhere Heizleistung hat.

Diese Aufgabe wird gemäß der Erfindung dadurch gelöst, daß die aus den PTC-Heizrohren und den mit den vom Kühlwasser durchströmten Heizrohren mit zugehörigen Lamellen jeweils aufgebauten Heizsysteme thermisch entkoppelt sind.

Bei der erfindungsgemäßen Ausbildung sind die Heizsysteme thermisch entkoppelt, so daß die gesamte Heizleistung des elektrischen Heizsystems für die Heizung der Luft zur Verfügung steht und nicht teilweise an das Kühlwasser abgegeben wird.

Besonders bevorzugte Ausgestaltungen und Weiterbildungen des erfindungsgemäßen Heizkörpers sind Gegenstand der Patentansprüche 2 bis 8.

Wenn insbesondere die beiden Arten von Heizrohren in verschiedenen Ebenen angeordnet sind, ist es nicht notwendig, die Anzahl der vom Kühlwasser durchströmten Heizrohre zu reduzieren, um Platz für die PTC-Heizrohre zu schaffen. Auch dadurch ergibt sich eine hohe Heizleistung des erfindungsgemäßen Heizkörpers.

Im Folgenden wird anhand der zugehörigen Zeichnungen ein besonders bevorzugtes Ausführungsbeispiel der Erfindung näher beschrieben.

Es zeigen
Fig. 1 eine schematische Seitenansicht des Ausführungsbeispiels,
Fig. 2 eine Draufsicht auf die Lamellen des in Fig. 1 dargestellten Ausführungsbeispiels mit den darin angeordneten Heizrohren und
Fig. 3 eine Schnittansicht durch ein PTC-Heizrohr für das in Fig. 1 dargestellte Ausführungsbeispiel.

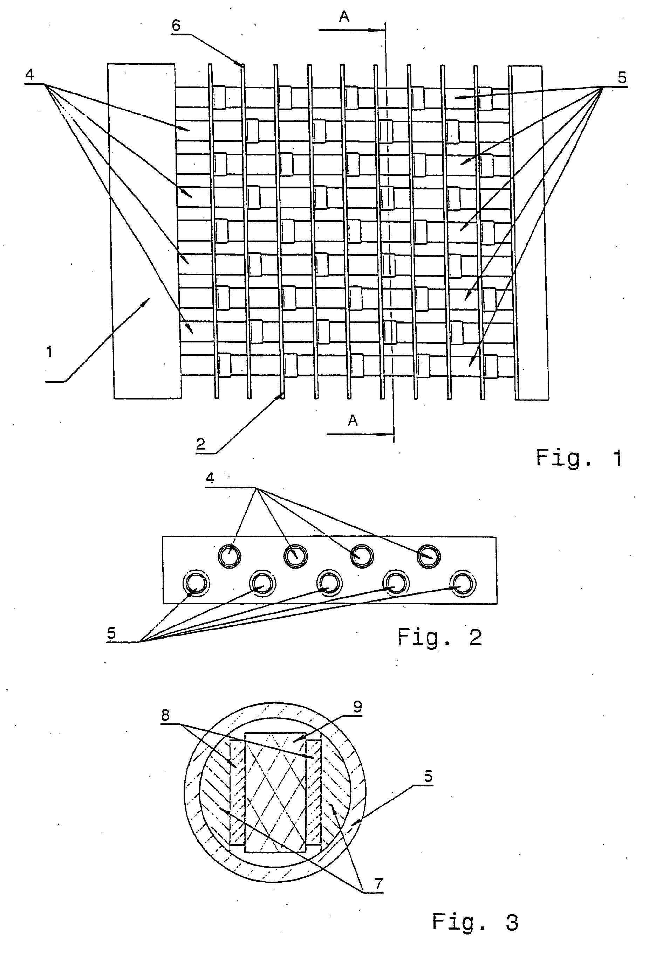

Das in Fig. 1 dargestellte Ausführungsbeispiel des erfindungsgemäßen Heizkörpers umfaßt einen Block, der aus vom Kühlwasser durchströmten Heizrohren 4, PTC-Heizrohren 5 und Lamellen 2, 6 aufgebaut ist, die mit den Heizrohren 4, 5 jeweils in thermischem Kontakt stehen.

Auf der einen Seite dieses Blockes ist ein Wasserkasten 1 mit daran angeordneter Elektronik und elektrischem Anschluß für PTC-Heizrohre 5 vorgesehen, während auf der gegenüberliegenden Seite ein reiner Wasserkasten 3 vorgesehen ist. Die vom Kühlwasser durchströmten Heizrohre stehen mit den Wasserkästen 1, 3 in Verbindung.

Wie es in Fig. 1 schematisch dargestellt ist, sind die Lamellen 2, 6 so ausgebildet, daß sie jeweils nur mit einer Art der Heizrohre 4, 5 in thermischen Kontakt stehen, während sie gegenüber der jeweils anderen Art der Heizrohre 4, 5 thermisch isoliert sind. Das heißt im Einzelnen, daß die Lamellen 6, die für die Wärmeübertragung vom Kühlwasser zuständig sind, in einem thermischen Kontakt mit den vom Kühlwasser durchströmten Heizrohren 4 stehen, jedoch gegenüber den PTC-Heizrohren 5 thermisch isoliert sind, während umgekehrt die Lamellen 2, die für die Wärmeübertragung von den PTC-Heizrohren 5 zuständig sind, mit diesen in einem thermischen Kontakt stehen, während sie gegenüber den vom Kühlwasser durchströmten Heizrohren 4 thermisch isoliert sind.

Wie es im Einzelnen in Fig. 2 dargestellt ist, sind die Heizrohre 4,5 in einer Linie zueinander aber zueinander versetzt und in verschiedenen Ebenen im Block des Heizkörpers angeordnet. Insbesondere die PTC-Heizrohre 5 können einen runden, einen ovalen oder auch einen rechteckigen Querschnitt haben.

Vorzugsweise ist die Ausbildung derart, daß die Lamellen 2 und 6 für die Wärmeübertragung vom Kühlwasser und von den PTC-Heizrohren in Längsrichtung der Heizrohre 4, 5 abwechselnd angeordnet sind.

Die thermische Isolierung der Lamellen gegenüber den Heizrohren 4, 5, für deren Wärmeübertragung sie nicht zuständig sind, kann dadurch bewirkt werden, daß diese Heizrohre 4, 5 mit einem gewissen Spalt durch die Lamellen 2, 6 hindurch geführt sind. In diesem Fall ist eine Führung der betreffenden Heizrohre 4, 5 durch die Lamellen 2, 6 nicht gegeben, so daß die Heizrohre 4, 5 vorzugsweise am Wasserkasten 1, 3 bzw. am Gehäuse am Ende der Heizrohre angebracht sind.

Es ist aber auch möglich, kleine Kontaktflächen zur Führung zwischen den Heizrohren 4, 5 und den Lamellen 2, 6, die nicht in thermischem Kontakt damit stehen sollen, zuzulassen, ohne daß die Heizleistung an die Luft entscheidend beeinträchtigt wird.

Die PTC-Heizrohre 5 und die damit in thermischem Kontakt stehenden Lamellen 2 müssen nicht unbedingt elektrisch gegeneinander isoliert sein, wenn sie gegenüber den wasserführenden Bauteilen und den Lamellen 6 für die Übertragung der Wärme vom Kühlwasser elektrisch isoliert sind. Das kann über Dichtungen am Wasserkasten 1, 3, zusätzliche Dichtungen zwischen den PTC-Heizrohren 5 und den Lamellen 6 für die vom Kühlwasser durchströmten Heizrohre 4 erreicht werden.

Fig. 3 zeigt ein Ausführungsbeispiel eines PTC-Heizrohres 5 mit elektrischer Isolierung gegenüber den Lamellen 2, die damit in thermischem Kontakt stehen.

Wie es in Fig. 3 dargestellt ist, sind im Inneren des Außenrohres ein PTC-Element 9, beidseitig Leistungsstränge 8 und an deren Außenseite zur Rohrinnenwand hin Isolierungen 7 angeordnet, die elektrisch aber nicht thermisch isolieren.

Um zu vermeiden, daß die Lamellen und damit eventuell auch als Wasserkreislauf in den Stromkreis integriert sind, sind die PTC-Heizrohre 5 vorzugsweise massefrei ausgeführt, wie es in Fig. 3 dargestellt ist.

## Patentansprüche

1. Heizkörper für die Heizungsanlage eines Kraftfahrzeuges mit einem aus vom Kühlwasser durchströmten Heizrohren, PTC-Heizrohren und damit in thermischen Kontakt stehenden Lamellen aufgebauten Block, **dadurch gekennzeichnet, daß** die beiden aus den Heizrohren (4) und den PTC-Heizrohren (5) mit zugehörigen Lamellen (2, 6) jeweils aufgebauten Heizsysteme thermisch entkoppelt sind.

2. Heizkörper nach Anspruch 1, **dadurch gekennzeichnet, daß** die mit den PTC-Heizrohren (5) und den vom Kühlwasser durchströmten Heizrohren (4) in thermischem Kontakt jeweils stehenden Lamellen (2, 6) gegenüber den jeweils anderen Heizrohren thermisch isoliert sind.

3. Heizkörper nach Anspruch 1 oder 2, **dadurch gekennzeichnet, daß** die PTC-Heizrohre (5) und die vom Kühlwasser durchströmten Heizrohre (4) in verschiedenen Ebenen im Block angeordnet sind.

4. Heizkörper nach Anspruch 1 ,2 oder 3, **dadurch gekennzeichnet, daß** die mit den PTC-Heizrohren (5) und mit den vom Kühlwasser durchströmten Heizrohren (4) in thermischem Kontakt stehenden Lamellen in Längsrichtung der Heizrohre (4, 5) abwechselnd angeordnet sind.

5. Heizkörper nach einem der vorhergehenden Ansprüche, **dadurch gekennzeichnet, daß** die thermische Isolierung zwischen den Lamellen (2, 6) und den jeweils anderen Heizrohren (4, 5) in Form eines dazwischen bestehenden Spaltes ausgebildet ist.

6. Heizkörper nach einem der vorhergehenden Ansprüche, **dadurch gekennzeichnet, daß** die thermische Isolierung der Lamellen (2, 6) gegenüber den jeweils anderen Heizrohren (4, 5) mit einem geringfügigen Flächenkontakt dazwischen ausgebildet ist.

7. Heizkörper nach einem der vorhergehenden Ansprüche, **dadurch gekennzeichnet, daß** die PTC-Heizrohre (5) gegenüber den damit in thermischem Kontakt stehenden Lamellen (2) elektrisch isoliert sind.

8. Heizkörper nach einem der vorhergehenden Ansprüche, **dadurch gekennzeichnet, daß** die PTC-Heizrohre (5) einen runden, ovalen oder rechteckigen Querschnitt haben.
